# EUROPÄISCHE PATENTANMELDUNG

(11) **EP 2 586 733 A1**
(43) Veröffentlichungstag der Anmeldung: **01.05.2013**
(21) Anmeldenummer: 12187890.4
(22) Anmeldetag: 10.10.2012
(51) Int. Cl.: B65G 47/66

(54) **Förderer zum Transportieren von Formteilen sowie Anlage mit einem solchen Förderer**

(30) Priorität: 25.10.2011 DE 202011107117 U; 11.11.2011 DE 202011107774 U
(71) Anmelder: SR Vermögensverwaltungs-GmbH, 93057 Regensburg (DE)
(72) Erfinder: Stöcker, Robert, 93197 Zeitlam (DE)
(74) Vertreter: Graf Glück Kritzenberger

(57) **Zusammenfassung**

Die Erfindung betrifft einen Transporteur zum Transportieren von Formteilen, beispielsweise von Steinen, Platten, Stufen, insbesondere von Formteilen (2) aus einem zementgebundenem Material oder aus Beton, mit einem an einem Maschinenrahmen (4)angeordneten, eine geschlossene Schlaufe bildenden und endlos umlaufend antreibbaren Transportelement (5), wobei das Transportelement (5) eine Vielzahl von in der Umlauf- oder Transportrichtung (TR) aufeinander folgenden Transportbalken (19) aufweist, die mit ihrer Längserstreckung jeweils senkrecht oder im Wesentlichen senkrecht zur Umlauf- oder Transportrichtung (TR) orientiert sind und mit einem bezogen auf die geschlossene Schlaufe des Transportelementes (5) außenliegenden Bereich (21) einer oberen Länge der geschlossenen Schlaufe des Transportelementes (5) eine Transportfläche (23) bilden, sowie mit wenigstens einer Anschlusseinheit (24,31) an einem Einlauf (1.1) und/oder an einem Auslauf (1.2) des Transporteurs (1) zur Übergabe der Steine oder Platten an die Transportfläche und/oder zur Abnahme der Steine oder Platten (2) von der Transportfläche (23).

## Beschreibung

Die Erfindung bezieht sich auf einen Transporteur zum Transportieren von Formteilen, beispielsweise von Steinen, Platten, Stufen usw., insbesondere zum Transportieren von Formteilen aus einem zementgebundenem Material oder aus Beton gemäß Oberbegriff Patentanspruch 1 sowie auf eine Vorrichtung oder Anlage mit einem solchen Transporteur gemäß Oberbegriff Patentanspruch 15.

Transporteure zum Transportieren von Steinen oder Platten, insbesondere zum Transportieren von Steinen oder Platten aus zementgebundenem Material oder Beton sind bekannt und werden beispielsweise in Anlagen zum Behandeln derartiger Steine oder Platte verwendet.

Steine, Platten oder Stufen im Sinne der Erfindung sind insbesondere solche, die zur Erstellung von befestigten begehbaren und/oder befahrbaren Flächen, wie Wegen, Fahrbahnen, Straßen oder dergleichen bzw. zur Erstellung von Treppen, im Innen- und Außenbereich verwendet werden, wobei die Steine oder Platten auch als Pflastersteine oder Bodenplatten bezeichnet werden.

Aufgabe der Erfindung ist es, ein Transporteur aufzuzeigen, der auch unter rauen Betriebsbedingungen ein Transportieren von Steinen oder Platten zuverlässig und störungsfrei gewährleistet. Zur Lösung dieser Aufgabe ist ein Transporteur entsprechend dem Patentanspruch 1 ausgebildet. Eine Vorrichtung oder Anlage ist Gegenstand des Patentanspruchs 15.

Der erfindungsgemäße Transporteur dient bevorzugt zum Transportieren von Gegenständen oder Formteilen aus einem zementgebundenem Material oder aus Beton, beispielsweise zum Transportieren von Steinen, Platten, Stufen usw. aus dem zementgebundenem Material oder aus Beton. Der erfindungsgemäße Transporteur bevorzugt Bestandteil einer Maschine oder Anlage zum Herstellen und/oder Behandeln von Gegenständen oder Formteilen aus Beton, beispielsweise zum Herstellen und/oder Behandeln von Steinen, Platten, Stufen aus Beton.

In Weiterbildung der Erfindung ist der Transporteur so ausgebildet,
dass die Nuten oder Schlitze an der Transportfläche der Tragbalken so vorgesehen sind, dass jeder Schlitz jedes Tragbalkens mit ihm zugeordneten Schlitzen der restlichen Tragbalken eine Schlitzfolge in einer die Transportrichtung einschließenden Ebene der Schlaufe des umlaufenden Transportelementes bildet
und/oder
dass die Transportbalken jeweils von wenigstens einem Hohlprofil oder einem einseitig offenen Profil, beispielsweise von einem U-Profil gebildet sind,
und/oder
dass die Tragbalken aus einem Tragprofil bestehen, an welchem in einer Tragprofillängsrichtung aufeinander folgend mehrere Profilabschnitte vorgesehen sind, die zwischen sich jeweils einen der Schlitze des Transportbalkens bilden,
u nd/oder
dass die Profilabschnitte an dem jeweiligen Tragbalken von wenigstens einem Hohlprofil oder einem einseitig offenen Profil, beispielsweise von einem U-Profil gebildet sind, welches mit einer Vielzahl der Schlitze versehen ist,
und/oder
dass die Profilabschnitte Stege oder bügel- oder rahmenförmige Profilabschnitte sind, u nd/oder
dass bei Ausbildung des Zusatzprofils als U-Profil mit zwei Schenkeln und einem diese verbindenden Jochabschnitt sich die Schlitze durch den Jochabschnitt sowie durch die Schenkel erstrecken, allerdings im Abstand von dem dem Jochabschnitt entfernt liegenden Rand wenigstens eines Schenkels enden,
und/oder
dass die fingerartigen Gleitelemente des wenigstens einen kamm- oder gitterartigen Anschlusselementes von Platten gebildet sind, die mit ihren Oberflächenseiten in der die Transportrichtung einschließenden Ebene der von dem Transportelement gebildeten Schlaufe angeordnet sind,
und/oder
dass jedes Gleitelement des wenigstens einen Anschlusselementes in die Nuten oder Schlitze von wenigstens zwei in Transportrichtung aufeinander folgenden Transportbalken eingreift,
und/oder
dass die Anschlusseinheit am Einlauf und/oder am Auslauf des Transporteurs wenigstens zwei in Transportrichtung aufeinander folgende gitter- oder kammartige Anschlusselemente mit jeweils einer Vielzahl von Gleitelementen aufweist, von denen ein erstes Anschlusselement mit seinen Gleitelementen in die Nuten oder Schlitze des Transportelementes eingreift und das zweite Anschlusselement mit seinen Gleitelementen überlappend mit den Gleitelementen des ersten Anschlusselementes zur Ausbildung einer gemeinsamen gitterartigen Gleitfläche der Anschlusseinheit angeordnet ist,
und/oder
dass das erste Anschlusselement an einem verstellbaren Lager für eine Umlenkung des Transportelementes vorgesehen ist,
und/oder
dass die Transportbalken jeweils beidendig an einem um wenigstens zwei Umlenkelemente oder Umlenkräder geführten und eine geschlossene Schlaufe bildenden Antriebselementen, beispielsweise in Form jeweils wenigstens einer Kette gehalten sind, und/oder
dass bei Ausbildung der Antriebselemente als Ketten diese als Rollenketten mit Laschen und dazwischen angeordneten Rollen ausgebildet ist, und dass die Ketten zwischen den Laschen mit ihren Rollen an Führungen zwischen dem Einlauf und dem Auslauf geführt sind,
und/oder
dass am Einlauf die Anschlusseinheit oder deren Gleitelemente in Transportrichtung zumindest bis an eine Ebene reichen, die senkrecht zur Transportrichtung orientiert ist und die Achse einer dortigen Umlenkung des Transportelementes einschließt,
und/oder
dass am Auslauf die Anschlusseinheit oder deren Gleitelemente entgegen der Transportrichtung zumindest bis an eine Ebene reichen, die senkrecht zur Transportrichtung orientiert ist und die Achse einer dortigen Umlenkung des
Transportelementes einschließt,
wobei die vorgenannten Markmale jeweils einzeln oder in beliebiger Kombination vorgesehen sein können.

Der Ausdruck "im Wesentlichen" bzw. "etwa" bedeutet im Sinne der Erfindung Abweichungen vom jeweils exakten Wert um +/-10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
Fig. 1 und 2 in vereinfachter Darstellung und in Seitenansicht bzw. Draufsicht einen Transporteur gemäß der Erfindung zum Transportieren von Steinen oder Platten, insbesondere solchen aus zementgebundenem Material oder Beton, in einer in diesen Figuren mit dem Pfeil TR angegebenen Transportrichtung;
Fig. 3 einen Schnitt entsprechend der Linie A - A der Figur 2;
Fig. 4 einen Schnitt entsprechend der Linie B - der Figur 2;
Fig. 5 einen Schnitt entsprechend der Linie C - C der Figur 2;
Fig. 6 einen Schnitt durch eine Transportkette;
Fig. 7 in Einzeldarstellung einen der Transportbalken;
Fig. 8 in vereinfachter Darstellung einen Schnitt durch den Transportbalken der Figur 6 entsprechend der Linie D - D;

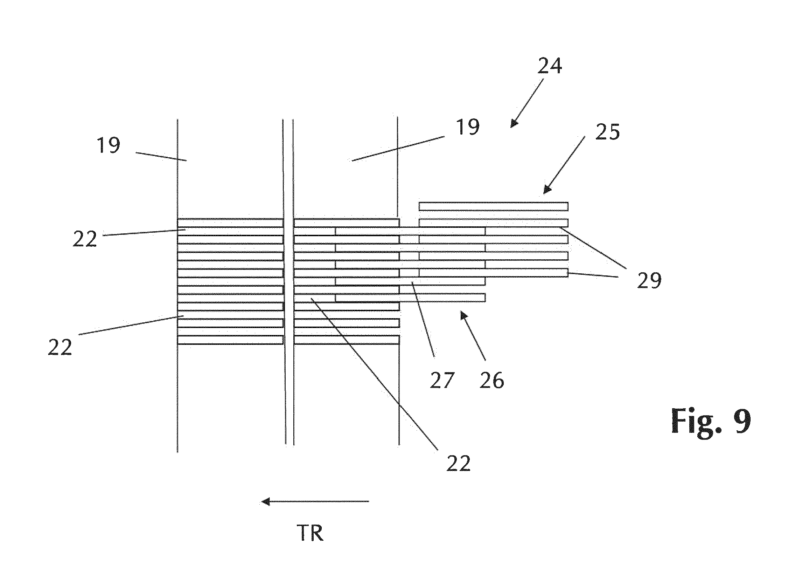

Fig. 9 in Teildarstellung und in Draufsicht zwei in Transportrichtung aneinander anschließende Transportbalken zusammen mit einer Übergabeeinheit am Einlauf des Transporteurs der Figuren 1 und 2.

Der in den Figuren allgemein mit 1 bezeichnete Transporteur dient zum Transportieren von Formteilen in Form von Steinen oder Platten 2, die beispielsweise aus einem zementgebundenem Material oder Beton hergestellt sind, in einer horizontalen oder im Wesentlichen horizontalen Transportrichtung TR. Auf dem Transporteur 1 sind die Steine oder Platten 2 jeweils zu Gruppen oder Lagen 3 zusammengefasst, in denen die Steine oder Platte 2 mit einer Mehrfachform geformt und zum Abbinden des Zements gelagert wurden und in denen die Steine oder Platten 2 eine vorgegebene, beispielsweise einem Verlegemuster entsprechende Anordnung relativ zueinander aufweisen.

Der Transporteur 1 besteht im Wesentlichen aus einem langgestreckten Maschinengestell oder Maschinenrahmen 4, der sich in Transportrichtung TR zwischen einem Einlauf 1.1 und einem Auslauf des Transporteurs 1 erstreckt und in dem ein endlos umlaufend antreibbares, d.h. eine in sich geschlossene Schlaufe bildendes Transportelement 5 vorgesehen ist. Im Detail besteht das Transportelement 5 aus zwei umlaufenden bzw. jeweils eine geschlossene Schlaufe bildenden Ketten 6, von denen jede an einer Längsseite des Rahmens 4 angeordnet ist, und zwar mit ihrer Schlaufenebene in einer vertikalen oder im Wesentlichen vertikalen Ebene parallel zur Transportrichtung TR.

jede Kette 6 ist am Einlauf 1.1 und am Auslauf 1.2 über ein Kettenrad 7 bzw. 8 geführt. Die beiden Kettenräder 7 am Einlauf 1.1 sind an einer gemeinsamen im Rahmen 4 drehbar gelagerten Welle 9 vorgesehen, die mit ihrer Achse horizontal und senkrecht zur Transportrichtung TA angeordnet ist. Zum Lagern der Welle 9 dient eine Lager 10, das zum Spannen der beiden Ketten 7 und 8 mittels einer Spannvorrichtung 11 entgegen der Transportrichtung TR horizontal oder im Wesentlichen horizontal und radial zur Achse der Welle 9 einstellbar ist. Die beiden Kettenräder 8 am Auslauf 1.2 sind an einer Welle 12 vorgesehen, die wiederum am Rahmen 4 drehbar gelagert und mit ihrer Wellenachse horizontal oder im Wesentlichen horizontal und senkrecht zur Transportrichtung TR orientiert ist. Durch einen Antrieb 13 sind die Welle 12 und über diese und die Kettenräder 8 auch die beiden Ketten 6 und das Transportelement 5 umlaufend antreibbar.

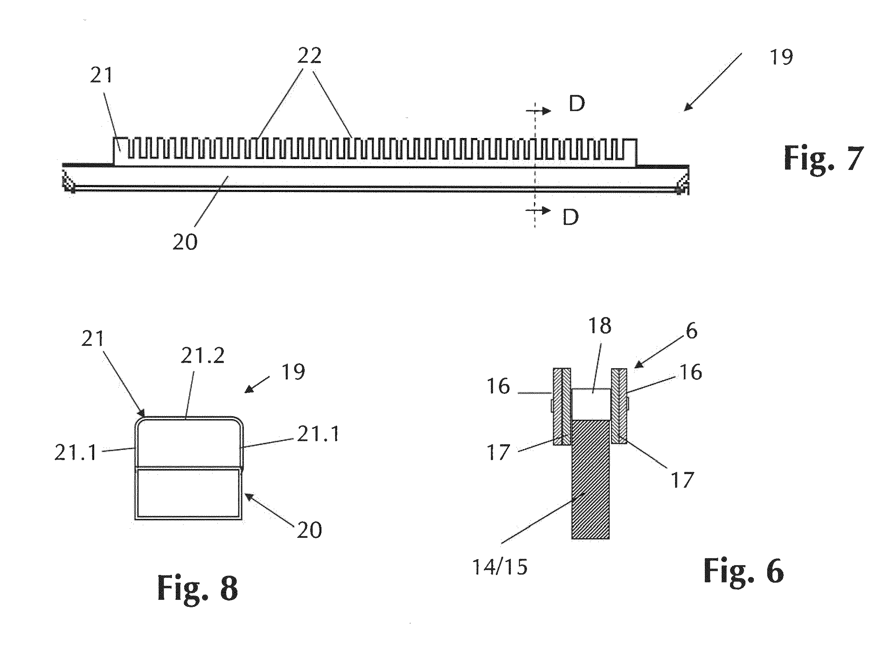

Zwischen den Kettenrädern 7 und 8 ist jede Kette 6 mit ihrer oberen Länge an einer oberen Führungsschiene 14 und mit ihrer unteren Länge an einer unteren Führungsschiene 15 geführt. Die Führungsschienen 14 und 15 erstrecken sich jeweils horizontal in Transportrichtung TR bzw. entgegen der Transportrichtung. Wie insbesondere die Figur 6 zeigt, sind die beiden Ketten 6 als Rollenketten mit Außenlaschen 16, Innenlaschen 17 und mit zwischen diesen Laschen angeordneten Hülsen und Rollen 18 ausgebildet. Die Führungen 14 und 15 sind jeweils leistenartig ausgeführt, und zwar derart, dass jede Kette 6 die entsprechende Führung zwischen ihren Laschen 16 und 17 aufnimmt und mit den Rollen 18 auf der Führung aufliegt.

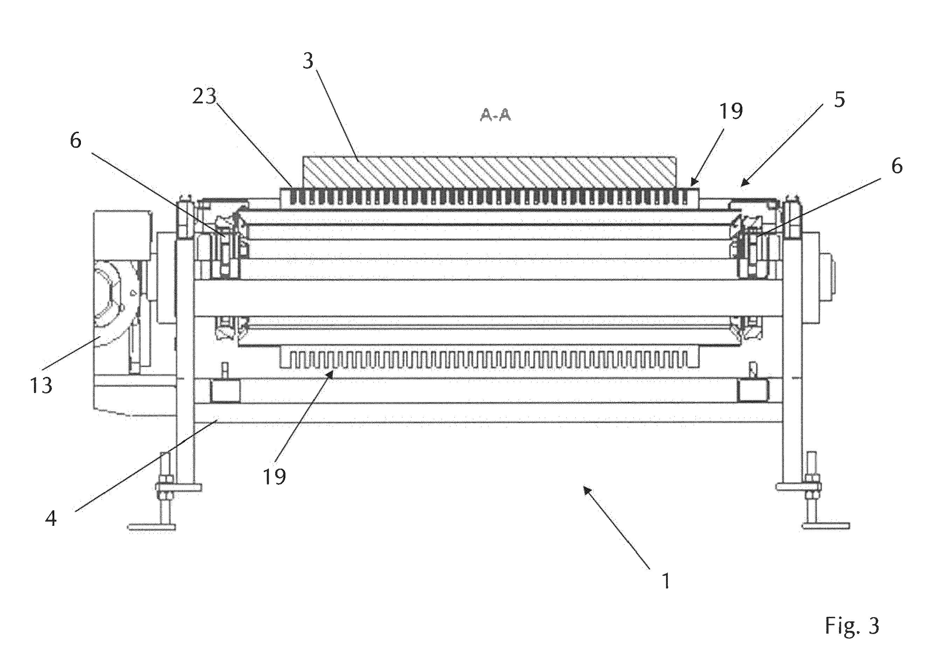

Das Transportelement 5 weist weiterhin eine Vielzahl von Transportbalken 19 auf, von denen jeder bei der dargestellten Ausführungsform aus einem Tragprofil 20 und aus einem mit diesem verbundenen zusätzlichen Profil 21 besteht. Bei der dargestellten Ausführungsform ist das Tragprofil 20 ein Rechteckhohlprofil, bevorzugt ist das Tragprofil 20 aber ein U-Profil. Das weitere Profil 21 ist ein U-Profil mit zwei Schenkeln 21.1 und einem diese Schenkel verbindenden Jochabschnitt 21.2. Die Profile 20 und 21 sind aus Stahl gefertigt, korrosionsbeständig ausgeführt oder beschichtet, beispielsweise verzinkt, und in geeigneter Weise, beispielsweise durch Verschweißen mit einander verbunden. Weiterhin ist das zusätzliche Profil 21 in regelmäßigen Abständen senkrecht zu seiner Längserstreckung geschlitzt, d.h. in regelmäßigen Abständen mit Schlitzen 22 versehen, die in dem Jochabschnitt 21.2 sowie auch in den beiden Schenkeln 21.1 ausgebildet sind, in jedem Schenkel 21.1 aber in einem Abstand von dem freien Ende dieses Schenkels enden, wie dies insbesondere auch der Figur 7 zu entnehmen ist. Wie insbesondere die Figuren 3 und 7 zeigen, besitzt das Tragprofil 20 bei der dargestellten Ausführungsform jeweils eine größere Länge als das Zusatzprofil 21, sodass das Tragprofil 19 beidendig über das Zusatzprofil 21 vorsteht.

Die Transportbalken 19 sind jeweils zwischen den Ketten 6 in dichter Folge angeordnet, und zwar derart, dass sämtliche Transportbalken 19 mit ihrer Längserstreckung senkrecht zu den Ebenen der von den Ketten 6 gebildeten Schlaufen bzw. mit ihren Längserstreckungen senkrecht zur Transportrichtung TR orientiert sind und jeder Transportbalken 19 mit einem Ende seines Tragprofils 20 an der einen Kette und mit dem anderen Ende seines Tragprofils 20 an der anderen Kette in geeigneter Weise befestigt ist. Die Anordnung der Transportbalken 19 an den beiden Ketten 6 ist insbesondere auch so getroffen, dass sie in Transportrichtung TR bzw. Umlaufrichtung der Ketten 6 möglichst dicht aneinander anschließen, die Jochabschnitte 21.2 der Zusatzprofil 21 sich an der Außenseite der Schlaufe des von den Ketten 6 und den Transportbalken 19 gebildeten Transportelementes 5 befinden. Die an der oberen Länge der in sich geschlossenen Schlaufe des Transportelementes 5 befindlichen Transportbalken 19 bilden somit mit den Jochabschnitten 21.2 eine horizontale oder im Wesentlichen horizontale Transportfläche 23, auf der die Steine oder Platten 2 bzw. deren Lagen 3 aufliegen.

Sämtliche Transportbalken 19 sind identisch ausgebildet und so angeordnet, dass jeder Schlitz 22 eines jeden Transportbalkens 19 in einer gemeinsamen die Transportrichtung TR einschließenden vertikalen oder senkrecht zu den Achsen der Wellen 9 und 12 orientierten Ebene mit den zugehörigen Schlitz 22 der übrigen Transportbalken 19 liegt, die Schlitze 22 also eine Vielzahl von Schlitzfolgen bilden, die jeweils in einer die Transportrichtung TR einschließenden vertikalen oder senkrecht zu den Achsen der Wellen 9 und 12 orientierten Ebene angeordnet sind.

Es versteht sich, dass die Breite, die die Schlitze 22 in Richtung der Längserstreckung des Transportbalkens 19 aufweisen, auf jeden Fall kleiner ist als die kleinste Abmessung, die die zu transportierenden Platten oder Steine 2 zumindest an ihrer auf der Transportfläche 23 aufliegenden Seite besitzen. Weiterhin ist auch die Anordnung der Transportbalken 19 an den Ketten 6 so getroffen, dass zumindest an der Transportfläche 23 der Abstand zwischen jeweils zwei Transportbalken 19 bzw. deren Zusatzprofile 21 ebenfalls deutlich kleiner ist als die kleinsten Abmessungen, die die zu transportierenden Platten oder Steine 2 zumindest an ihrer auf der Transportfläche 23 aufliegenden Seite besitzen. der zu transportierenden Steine oder Platten 2.

Am Einlauf 1.1 werden die Steine oder Platten 2 bzw. die von diesen gebildeten Lagen 3 durch Über- oder Aufschieben an den Transporteur 1 bzw. an dessen Transportfläche 23 übergeben. Um diese Übergabe barrierefrei zu gestalten und insbesondere Stufen oder andere Hindernisse zu vermeiden, an denen die Steine oder Platten 2 hängen bleiben und/oder sich auftürmen und/oder ihre Anordnung und/oder Ausrichtung in der jeweiligen Lage 3 verlieren könnten, ist am Einlauf eine Überschub- oder Anschlusseinheit 24 vorgesehen. Diese besteht bei der dargestellten Ausführungsform aus zwei in Transportrichtung TR aneinander anschließenden rechen- oder kammartigen Anschlusselementen 25 und 26, von denen das Anschlusselement 25 mit dem Rahmen 4 und das Anschlusselement 26 mit dem Lager 10 für die Welle 9 verbunden ist.

Das rechen- oder kammartige Anschlusselement 26 besteht aus einer Vielzahl von Rechen- oder Gleitelementen 27, die bei dargestellten Ausführungsform jeweils von einem Gleitblech aus Stahl gebildet sind, welches mit den Ebenen seiner Oberflächenseiten senkrecht zu der Achse der Welle 9 orientiert. Die parallel zueinander und voneinander beabstandeten Gleitelemente 27 sind an einem Tragprofil 28 befestigt, und zwar derart, dass jedes Gleitelement 27 von dem Tragprofil in Transportrichtung TR wegsteht. Mit einem oberen Rand 27.1 bildest jedes Gleitelement 27 eine in der horizontalen Ebene der Transportebene 23 angeordnete horizontale oder im Wesentlichen horizontale Gleitfläche für die Steine oder Platten 2 und greift mit einem vom Tragprofil 28 beabstandeten Teilbereich an der von den Kettenrädern 7 gebildeten Umlenkung des Transportelementes 5 jeweils in eine der Schlitzfolgen ein, die von die einander zugeordneten Schlitzen 22 der Tragbalken 19 gebildet ist, und zwar derart, dass jedes Gleitelement 27 bei umlaufendem Transportelement 5 ständig in die Schlitzen 22 von wenigstens zwei in Transportrichtung TR auf einander folgenden Transportbalken 19 hineinreicht und dabei die Gleitelement 27 mit einer oberen, vorzugsweise ebenen oder im Wesentlichen ebenen Gleitfläche 27.1 in einer gemeinsamen Ebene mit der Transportfläche 23 liegen. Somit ist ein stufenloser Übergang zwischen dem Anschlusselement 26 bzw. dessen gitterartiger Gleitfläche und dem umlaufenden Transportelement 5 erreicht ist. Es versteht sich, dass die Anzahl der Gleitelemente 27 wenigstens gleich in der Anzahl der Schlitze 22 an den Transportbalken 19 ist.

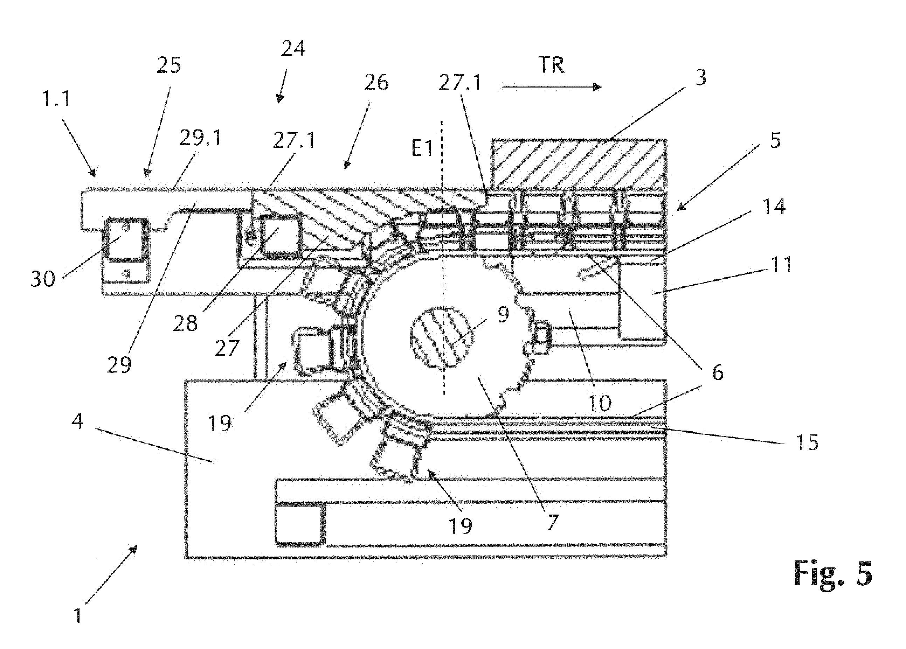

In der Figur 5 ist mit E1 eine Ebene angegeben, die senkrecht zur Transportrichtung TR orientiert ist und in der auch die Achse der Welle 9 angeordnet ist. Wie u.a. aus dieser Figur ersichtlich, erstrecken sich die Gleitelemente 27 durch die Ebene E1, so dass sich die freien, dem Tragprofil 28 entfernt liegenden Enden 27.2 sämtlicher Gleitelemente 27 in Transportrichtung TR auf die Ebene E1 folgen und vorzugsweise den selben abstand von dieser Ebene E1 aufweisen. Hierdurch wird erreicht, dass die Steine oder Platten 2 ohne Abkippen von dem Überschub- oder Anschlusseinheit 24 auf die Transportfläche 23 gefördert werden.

Das Anschlusselement 25 ist ähnlich dem Anschlusselement 26 ausgeführt und besteht aus mehreren plattenartigen Gleitelementen 29, die wiederum aus Stahlblech gefertigt ist mit ihren Oberflächenseiten in die Transportrichtung TR einschließenden vertikalen bzw. senkrecht zur Achse der Welle 9 orientierten Ebenen angeordnet sind. Die Gleitelemente 29, die mit ihrem oberen Rand eine gitterartige Gleitfläche 29.1 für die Steine oder Platten 2 bilden, sind an einem Tragprofil 30, beispielsweise durch Verschweißen so befestigt, dass jede Gleitelement 29, welches sich in Transportrichtung TR von dem zugehörigen Tragprofil 30 wegerstreckt, mit einer Teillänge überlappend in einen Spalt zwischen zwei benachbarten Gleitelementen 27 hineinreicht, und zwar derart, dass die gitterartige Gleitfläche des Anschlusselementes 25 stufenlos in die gitterartige Gleitfläche des Anschlusselementes 26 übergeht. Die Überlappung zwischen den Gleitelementen 27 und 29 ist ausreichend groß, um das Verstellen des Lagers 10 beim Spannen der Ketten 6 zu ermöglichen, ohne dass eine Unterbrechung zwischen den gitterartigen Gleitflächen der Anschlusselemente 25 und 26 erfolgt.

Am Auslauf 10.2 ist eine Anschlusseinheit 31 vorgesehen, die wiederum einen stufen- oder barrierefreien Übergang zwischen Transportfläche 23 und einer anschließenden Einrichtung ermöglicht. Die Anschlusseinheit 31 besteht bei der dargestellten Ausführungsform aus einem einzigen gitter- oder kammartigen Anschlusselement, welches in gleicher Weise wie das Anschlusselement 26 ausgeführt und daher ebenfalls mit 26 bezeichnet ist. Ein Unterschied besteht darin, dass sich die die gitterartige Gleitfläche bildenden Gleitelemente 27 entgegen der Transportrichtung TR von dem Tragprofil 28 wegerstrecken. Die vorstehenden Ausführungen zu dem Anschlusselement 26 der Anschlusseinheit 24 gelten also sinngemäß auch für die Anschlusseinheit 31 und deren Anschlusselement 26.

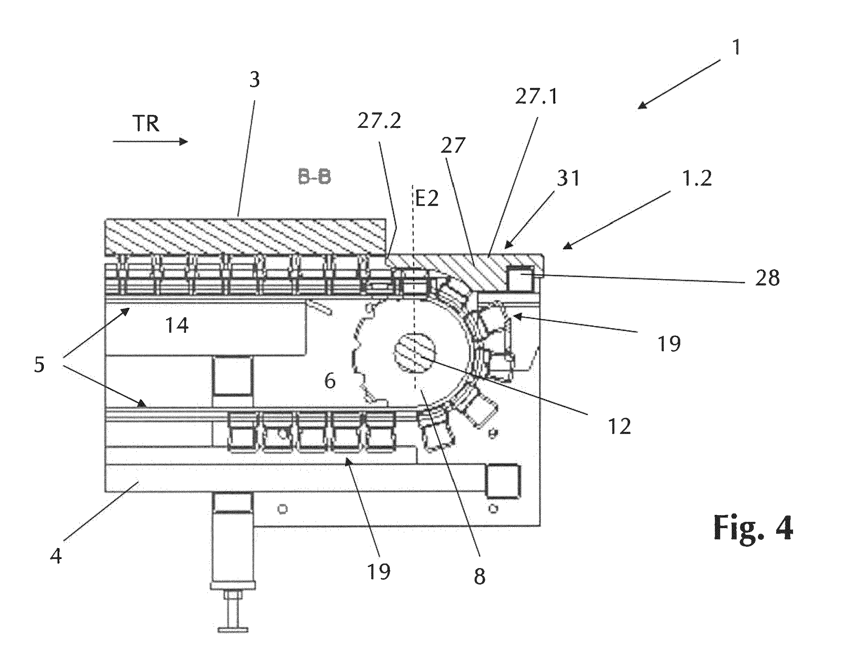

In der Figur 4 ist mit E2 eine Ebene angegeben, die senkrecht zur Transportrichtung TR orientiert ist und in der auch die Achse der Welle 12 angeordnet ist. Wie u.a. aus dieser Figur ersichtlich, erstrecken sich die Gleitelemente 27 durch die Ebene E2, so dass sich die freien, dem Tragprofil 28 entfernt liegenden Enden 27.2 sämtlicher Gleitelemente 27 in Transportrichtung TR sich vor der Ebene E2 befinden und vorzugsweise den selben abstand von der Ebene E2 aufweisen. Hierdurch wird erreicht, dass die Steine oder Platten 2 ohne Abkippen von der Transportfläche 23 auf die Überschub- oder Anschlusseinheit 31 gefördert werden.

Die Funktionselemente des Transporteurs 1 und dabei insbesondere der Rahmen 4 und das Transportelement 5 bzw. dessen Komponenten sind dabei insbesondere auch die Transportbalken 19 sowie die Elemente der Anschlusseinheiten 24 und 31 sind aus Stahl korrosionsgeschützt, beispielsweise feuerverzinkt ausgeführt.

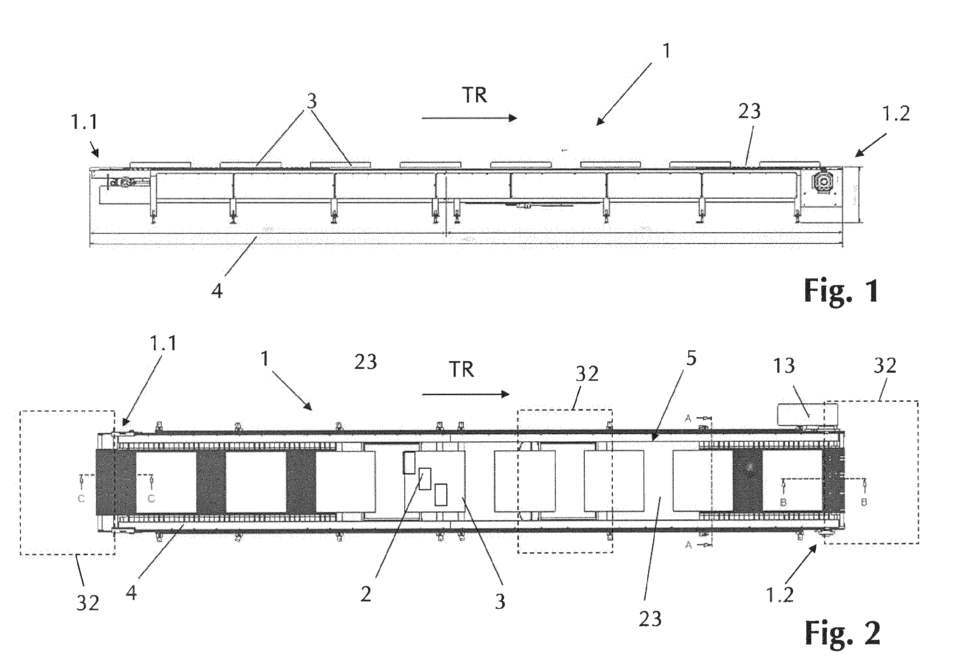

Der Transporteur ist beispielsweise Teil einer Vorrichtung oder Anlage zum Herstellen und/oder Bearbeiten der Steine oder Platten 2, wobei die Anlage wenigstens ein, bevorzugt aber mehrere Behandlungsstationen oder Aggregate aufweist, wie dies in der Figur 2 schematisch mit 32 angedeutet ist.

Besondere Vorteile des Transporteurs 1 bestehen u.a. darin,
dass mit ihm auch kleinformatige Steine oder Platten 2, beispielsweise mit Seitenabmessungen von etwa 40mm'x 40mm störungsfrei gefördert werden können,
dass er auch unter rauen Betriebsbedingungen eine hohe Betriebssicherheit und ein störungsfreies Arbeiten gewährleistet, und zwar durch seine robuste Konstruktion,
dass mit ihm ein Transport der Steine oder Platten 2 bzw. deren Lagen 3 ohne eine Behinderung, insbesondere am Einlauf 1.1 und am Auslauf 1.2 gewährleistet ist, und
dass durch die gitterartige Struktur der Gleitflächen an den Anschlusseinheiten 24 und 30, vor allem auch durch die von den Schlitzen 22 gebildete gitterartige Struktur der Transportfläche 23 und durch die Ausbildung der Transportbalken 19 mit dem Tragprofil 20 und dem Zusatzprofil 21 eine von staub- und abriebfreie Transportebene gewährleistet ist.

Sämtlicher Staub und Abrieb, der sich insbesondere auch bei Steinen oder Platten 2 aus einem zementgebundenen Material nicht vermeiden lässt, fällt durch die gitterartigen Gleitflächen der Anschlusseinheit 24 und 31 sowie durch die Schlitze 22 der Transportbalken 19 nach unten, wobei Letztere auf der unteren, den Rücklauf bildenden Länge der Schlaufe des Transportelementes 5 gewendet sind, sodass dort Staub oder Abrieb von den Transportbalken 19 abfällt, d.h. eine Selbstreinigung des Transportelementes 5 erfolgt.

Weitere Vorteile des erfindungsgemäßen Transporteurs sind u.a., dass durch die Profilausführung der Transportbalken 19 bzw. des Tragprofils 20 und des Zusatzprofils 21 eine gute Hinterlüftung der Unterseite der Produkte bzw. Formteile, insbesondere auch bei einem Beheizen und/oder Kühlen, z.B. während einer Behandlung der Formteile, und/oder eine gute Absaugwirkung von Dämpfen oder von Nebel beim Besprühen der Produkte, beispielsweise für eine Oberflächenbehandlung der Formteile, und damit eine Unempfindlichkeit gegen Verschmutzung durch Sprühnebel oder Dämpfe, und/oder
ein Selbstreinigungseffekt sowie ein Eigenkühlung des Transporteurs erreicht werden, und zwar letzterer durch die große, freiliegende Fläche, insbesondere auch an den Schenkeln des Tragprofils 20 und des Zusatzprofils 21.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

Vorstehend wurde davon ausgegangen, dass die Gleitelemente 27 mit ihren Enden 27.2 jeweils von den Ebenen E1 und E2 beabstandet sind. Grundsätzlich wäre es auch ausreichend, dass die Gleitelemente 27 mit ihren Enden 27.2 jeweils bis an diese Ebenen reichen. Zum Ausgleich von Herstellungstoleranzen sind die Enden 27.2 aber von den Ebenen E1 und E2 in der vorbeschriebenen Weise beabstandet.

### Bezugszeichenliste

- 1: Transporteur
- 1.1: Einlauf des Transporteurs
- 1.2: Auslauf des Transporteurs
- 2: Stein oder Platte
- 3: Anordnung oder Lage
- 4: Maschinenrahmen
- 5: Transportelement
- 6: Kette
- 7,8: Kettenrad
- 9: Welle
- 10: Lageranordnung
- 11: Spannvorrichtung
- 12: Welle
- 13: Antrieb
- 14, 15: Führungsschiene
- 16, 17: Lasche
- 18: Rolle
- 19: Transportbalken
- 20: Tragprofil
- 21: Zusatzprofil
- 22: Schlitz
- 23: Transportfläche
- 24: Anschlusseinheit
- 25, 26: Anschlusselement
- 27: Gleitelement
- 27.1: Gleitfläche
- 27.2: Ende
- 28: Tragprofil
- 29: Gleitelement
- 29.1: Gleitfläche
- 30: Tragprofil
- 31: Anschlusseinheit
- E1, E2: Ebene
- TR: Transportrichtung

## Patentansprüche

1. Transporteur zum Transportieren von Formteilen (2), beispielsweise von Steinen, Platten, Stufen, insbesondere von Formteilen (2) aus einem zementgebundenem Material oder aus Beton, mit einem an einem Maschinenrahmen (4) angeordneten, eine geschlossene Schlaufe bildenden und endlos umlaufend antreibbaren Transportelement (5), wobei das Transportelement (5) eine Vielzahl von in der Umlauf- oder Transportrichtung (TR) aufeinander folgenden Transportbalken (19) aufweist, die mit ihrer Längserstreckung jeweils senkrecht oder im Wesentlichen senkrecht zur Umlauf- oder Transportrichtung (TR) orientiert sind und mit einem bezogen auf die geschlossene Schlaufe des Transportelementes (5) außenliegenden Bereich (21) einer oberen Länge der geschlossenen Schlaufe des Transportelementes (5) eine Transportfläche (23) bilden, sowie mit wenigstens einer Anschlusseinheit (24, 31) an einem Einlauf (1.1) und/oder an einem Auslauf (1.2) des Transporteurs (1) zur Übergabe der Steine oder Platten (2) an die Transportfläche (23) und/oder zur Abnahme der Steine oder Platten (2) von der Transportfläche (23),
**dadurch gekennzeichnet,**
**dass** die wenigstens eine Anschlusseinheit (24, 31) zumindest ein gitter- oder kammartiges Anschlusselement (26) aufweist, welches eine gitterartige Gleitfläche für die Steine oder Platten (2) bildet und eine Vielzahl von in Transportrichtung (TR) orientierten Gleitelementen (27) aufweist, die die gitterartige Gleitfläche bilden und jeweils im Bereich des Einlaufs (1.1) und/oder des Auslaufs (1.2) in Nuten oder Schlitze (22) eingreifen, die an der Transportfläche (23) des Transprtelementes (5) vorgesehen sind.

2. Transporteur nach Anspruch 1, **dadurch gekennzeichnet, dass** die Nuten oder Schlitze an der Transportfläche der Tragbalken (19) so vorgesehen sind, dass jeder Schlitz (22) jedes Tragbalkens (19) mit ihm zugeordneten Schlitzen der restlichen Tragbalken (19) eine Schlitzfolge in einer die Transportrichtung (TR) einschließenden Ebene der Schlaufe des umlaufenden Transportelementes (5) bildet.

3. Transporteur nach Anspruch 1, **dadurch gekennzeichnet, dass** die Transportbalken (19) jeweils von wenigstens einem Hohlprofil oder einem einseitig offenen Profil, beispielsweise von einem U-Profil gebildet sind.

4. Transporteur nach Anspruch 2 oder 3, **dadurch gekennzeichnet, dass** die Tragbalken (19) aus einem Tragprofil bestehen, an welchem in einer Tragprofillängsrichtung aufeinander folgend mehrere Profilabschnitte vorgesehen sind, die zwischen sich jeweils einen der Schlitze (22) des Transportbalkens bilden.

5. Transporteur nach Anspruch 4, **dadurch gekennzeichnet, dass** die Profilabschnitte an dem jeweiligen Tragbalken (19) von wenigstens einem Hohlprofil oder einem einseitig offenen Profil, beispielsweise von einem U-Profil gebildet sind, welches mit einer Vielzahl der Schlitze (22) versehen ist.

6. Transportelement nach Anspruch 4 oder 5, **dadurch gekennzeichnet, dass** die Profilabschnitte Stege oder bügel- oder rahmenförmige Profilabschnitte sind.

7. Transporteur nach einem der vorhergehenden Ansprüche, **dadurch gekennzeichnet, dass** bei Ausbildung des Zusatzprofils (21) als U-Profil mit zwei Schenkeln (21.1) und einem diese verbindenden Jochabschnitt (21.2) sich die Schlitze (22) durch den Jochabschnitt sowie durch die Schenkel (21.1) erstrecken, allerdings im Abstand von dem dem Jochabschnitt (21.2) entfernt liegenden Rand wenigstens eines Schenkels (21.1) enden.

8. Transporteur nach einem der vorhergehenden Ansprüche, **dadurch gekennzeichnet, dass** die fingerartigen Gleitelemente (27) des wenigstens einen kamm- oder gitterartigen Anschlusselementes (26) von Platten gebildet sind, die mit ihren Oberflächenseiten in der die Transportrichtung (TR) einschließenden Ebene der von dem Transportelement (5) gebildeten Schlaufe angeordnet sind.

9. Transporteur nach einem der vorhergehenden Ansprüche, **dadurch gekennzeichnet, dass** jedes Gleitelement (27) des wenigstens einen Anschlusselementes (26) in die Nuten oder Schlitze (22) von wenigstens zwei in Transportrichtung (TR) aufeinander folgenden Transportbalken (19) eingreift.

10. Transporteur nach einem der vorhergehenden Ansprüche, **dadurch gekennzeichnet, dass** die Anschlusseinheit (24, 31) am Einlauf (1.1) und/oder am Auslauf (1.2) des Transporteurs (1) wenigstens zwei in Transportrichtung (TR) aufeinander folgende gitter- oder kammartige Anschlusselemente (25, 26) mit jeweils einer Vielzahl von Gleitelementen (27, 29) aufweist, von denen ein erstes Anschlusselement (26) mit seinen Gleitelementen (27) in die Nuten oder Schlitze (22) des Transportelementes (5) eingreift und das zweite Anschlusselement (25) mit seinen Gleitelementen (29) überlappend mit den Gleitelementen (27) des ersten Anschlusselementes (26) zur Ausbildung einer gemeinsamen gitterartigen Gleitfläche der Anschlusseinheit (24) angeordnet ist.

11. Transporteur nach Anspruch 10, **dadurch gekennzeichnet, dass** das erste Anschlusselement (26) an einem verstellbaren Lager (10) für eine Umlenkung (7) des Transportelementes (5) vorgesehen ist.

12. Transporteur nach einem der vorhergehenden Ansprüche, **dadurch gekennzeichnet, dass** die Transportbalken (19) jeweils beidendig an einem um wenigstens zwei Umlenkelemente oder Umlenkräder (7, 8) geführten und eine geschlossene Schlaufe bildenden Antriebselementen (6), beispielsweise in Form jeweils wenigstens einer Kette gehalten sind,
wobei beispielsweise bei Ausbildung der Antriebselemente als Ketten (6) diese als Rollenketten mit Laschen (16, 17) und dazwischen angeordneten Rollen (18) ausgebildet ist, und dass die Ketten (6) zwischen den Laschen (16, 17) mit ihren Rollen (18) an Führungen (14, 15) zwischen dem Einlauf (1.1) und dem Auslauf (1.2) geführt sind.

13. Transporteur nach einem der vorhergehenden Ansprüche, **dadurch gekennzeichnet, dass** am Einlauf (1.1) die Anschlusseinheit (24) oder deren Gleitelemente (27) in Transportrichtung (TR) zumindest bis an eine Ebene (E1) reichen, die senkrecht zur Transportrichtung (TR) orientiert ist und die Achse einer dortigen Umlenkung (9) des Transportelementes (5) einschließt.

14. Transporteur nach einem der vorhergehenden Ansprüche, **dadurch gekennzeichnet, dass** am Auslauf (1.2) die Anschlusseinheit (31) oder deren Gleitelemente (27) entgegen der Transportrichtung (TR) zumindest bis an eine Ebene (E2) reichen, die senkrecht zur Transportrichtung (TR) orientiert ist und die Achse einer dortigen Umlenkung (12) des Transportelementes (5) einschließt.

15. Vorrichtung oder Anlage zum Herstellen und/oder zum Bearbeiten von Gegenständen oder Formteilen aus einem zementgebundenem Material oder aus Beton, beispielsweise zum Transportieren von Steinen, Platten, Stufen usw. aus dem zementgebundenem Material oder aus Beton, mit wenigstens einer Arbeitsstation (32) und mit wenigstens einem Transporteur (1), **dadurch gekennzeichnet, dass** der Transporteur (1) nach einem der vorhergehenden Ansprüche ausgebildet ist.
